(19) Europäisches Patentamt
European Patent Office
Office européen des brevets

(11) **EP 4 778 990 A1**

(12) **DEMANDE DE BREVET EUROPEEN**

(43) Date de publication:
**22.07.2026 Bulletin 2026/30**

(21) Numéro de dépôt: **26152452.4**

(22) Date de dépôt: **16.01.2026**

(51) Classification Internationale des Brevets (IPC):
***C09K 5/06*** *(2006.01)*

(52) Classification Coopérative des Brevets (CPC):
**C09K 5/02**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **17.01.2025 FR 2500479**

(71) Demandeur: **Commissariat à l'Energie Atomique et aux Energies Alternatives
75015 Paris (FR)**

(72) Inventeurs:
• **SAAD, Ali
38054 GRENOBLE CEDEX 09 (FR)**
• **LARGILLER, Grégory
38054 GRENOBLE CEDEX 09 (FR)**
• **WEICK, Clément
38054 GRENOBLE CEDEX 09 (FR)**
• **PIETRI, Thomas
38054 GRENOBLE CEDEX 09 (FR)**

(74) Mandataire: **Regimbeau
20, rue de Chazelles
75847 Paris Cedex 17 (FR)**

(54) **SYSTÈME COMPORTANT UNE PIÈCE DE RÉGULATION DE TEMPÉRATURE EN MATÉRIAU À CHANGEMENT DE PHASE SOLIDE-SOLIDE**

(57) La présente invention concerne un système (20) comprenant :
- un dispositif (22) susceptible de changer de température ; et
- une pièce de régulation thermique (8, 24) montée au contact du dispositif (22) et configurée pour réaliser un transfert thermique avec le dispositif, la pièce de régulation (8, 24) étant une pièce massive comprenant un matériau à changement de phase solide-solide comprenant au moins un composé à changement de phase solide-solide, le composé à changement de phase solide-solide étant un composé hybride organique/inorganique, le matériau présentant une première structure solide lorsque le matériau est à une température inférieure à une température de transition du composé à changement de phase et présentant une deuxième structure solide, différente de la première structure solide, lorsque le matériau est à une température supérieure à la température de transition.

[Fig. 3a]

EP 4 778 990 A1

**Description**

**DOMAINE DE L'INVENTION**

L'invention concerne la régulation de la température de dispositifs qui chauffent lors de leur fonctionnement, comme par exemple des batteries.

**ETAT DE LA TECHNIQUE**

Les matériaux à changement de phase (MCP) connus sous l'anglicisme « phase change materials » (PCMs) présentent un grand intérêt pour réguler la température d'un système en raison de leur capacité à absorber et évacuer de la chaleur en fonction d'un changement de leur état physique. Ces matériaux à changement de phase sont notamment utilisés pour la régulation thermique des batteries, et notamment pour la régulation thermique des cellules de stockage contenues dans les batteries. Les matériaux à changement de phase permettent notamment de refroidir les cellules de stockage.

En effet, lors du fonctionnement d'une batterie, que ce soit en charge ou en décharge, les cellules de stockage émettent de la chaleur, qui, en l'absence de systèmes adapté de refroidissement, aurait pour effet d'augmenter la température des cellules.

Pour limiter le vieillissement des cellules d'une batterie, il est bénéfique de maintenir autant que possible la température des cellules de stockage dans une gamme de températures acceptables, par exemple à des températures inférieures à 70°C.

Dans le cas d'un mauvais fonctionnement, comme par exemple au cours d'une surcharge ou d'un défaut au niveau d'une cellule, celle-ci peut également être amenée à surchauffer. Si sa température dépasse un certain seuil, par exemple situé dans une gamme allant de 70°C à 110°C, un phénomène d'emballement thermique peut se produire qui peut mener à la destruction de la cellule, par exemple sous forme d'un départ de feu et/ou d'une explosion, mais également à un risque important de propagation de cet emballement à d'autres cellules de la batterie.

Il est donc intéressant de disposer de moyens assurant une fonction de régulation thermique des cellules de stockage et de la batterie dans son ensemble, en maintenant les cellules dans une gamme de températures pouvant réduire leur vieillissement en opération et/ou réduire le risque d'un éventuel emballement thermique de celles-ci.

Dans le domaine plus général de la régulation thermique de systèmes, la recherche s'est concentrée sur les matériaux à changement de phase solide-liquide, connus sous l'anglicisme « solid-liquid phase change materials » (SL-PCMs), pour leur efficacité dans la régulation de la température. En particulier, ces matériaux se présentent dans un état solide en dessous d'une certaine température, appelée température de transition ou de changement d'état, et peuvent alors absorber la chaleur qui se dégage d'un système avec lequel ils sont en contact. Cette absorption de chaleur entraine une augmentation de la température du matériau qui, lorsqu'il atteint sa température de transition, change d'état physique et se transforme alors pour passer dans un état liquide. Le matériau peut ensuite évacuer cette chaleur vers l'extérieur du système ce qui lui permet de se refroidir et de repasser, une fois la température de transition atteinte, dans un état solide. L'extérieur du système est notamment l'air ambiant ou une pièce distincte. Cependant, le fait que, dans un des états, le matériau soit liquide rend son utilisation complexe.

Afin de pouvoir utiliser les matériaux à changement de phase solide-liquide, des structures aptes à contenir le matériau à changement de phase et ayant la forme voulue ont alors été développées. Il peut s'agir de boitiers de forme souhaitée contenant le matériau ou encore de matériaux à changement de phase solide-liquide de forme stable, connus sous l'anglicisme « form-stable PCMs », dans lesquels le matériau se trouve dans une matrice formée en polymère ou en structure fibreuse. Le matériau à changement de phase se trouve alors intégré dans la structure de sorte que, lorsqu'il est à l'état liquide, sa forme soit maintenue et qu'il n'y ait pas de fuite.

Cependant, la structure peut diminuer la capacité d'absorption et d'évacuation de chaleur du matériau qu'elle contient et qui peut alors présenter des performances limitées. Par ailleurs, la structure peut présenter une solidité qui diminue avec le temps et présenter alors des cassures ou fissures qui entrainent des fuites du matériau lorsqu'il est dans son état liquide.

Il existe également des matériaux à changement de phase solide-solide, connus sous l'anglicisme « solid-solid phase change materials » (SS-PCMs). Ces matériaux présentent au moins deux formes cristallines ou semi cristallines différentes selon leur température. Ils passent ainsi d'une structure solide initiale à une autre structure solide lorsqu'ils absorbent de la chaleur et reviennent à la structure solide initiale en évacuant la chaleur préalablement absorbée. Cependant, ces matériaux sont connus sous forme de poudre ce qui rend leur utilisation en tant que régulateur de température compliquée.

**EXPOSE DE L'INVENTION**

Un objectif de la présente invention est de développer un système comprenant une pièce de régulation de température en un matériau à changement de phase permettant une régulation efficace de la température.

Un autre objectif de la présente invention est de développer une pièce de régulation de température en un matériau à changement de phase qui soit simple à fabriquer et dont les propriétés restent stables au cours du temps et après de nombreuses utilisations.

A cet effet, l'invention a pour premier objet un système comprenant :

- un dispositif susceptible de changer de température ; et
- une pièce de régulation thermique montée au contact du dispositif et configurée pour réaliser un transfert thermique avec le dispositif, la pièce de régulation étant une pièce massive comprenant un matériau à changement de phase solide-solide comprenant au moins un composé à changement de phase solide-solide, le composé à changement de phase solide-solide étant un composé hybride organique/inorganique, le matériau présentant une première structure solide lorsque le matériau est à une température inférieure à une température de transition du composé à changement de phase et présentant une deuxième structure solide, différente de la première structure solide, lorsque le matériau est à une température supérieure à la température de transition.

Le matériau à changement de phase étant du type solide-solide et la pièce de régulation étant massive, il n'est pas nécessaire de l'intégrer dans une structure pour qu'il garde sa forme. Les inconvénients de l'utilisation de matériaux à changement de phase solide-liquide sont évités.

Par ailleurs, le composé à changement de phase hybride organique/inorganique présente des propriétés qui permet d'optimiser la régulation de la température. Ce composé peut notamment être mis en forme sous forme massive. Ainsi, il n'y a pas de perte d'efficacité du matériau puisque la pièce de régulation n'est pas entourée d'une structure enveloppant le matériau qui est donc directement à proximité ou en contact du dispositif, le contact pouvant être direct ou indirect. Un contact indirect est notamment un contact par l'intermédiaire d'une pièce, de préférence thermiquement conductrice, ou par l'intermédiaire d'une couche d'air.

Le dispositif susceptible de changer de température est notamment un dispositif susceptible de chauffer et donc de dégager de la chaleur. Le matériau à changement de phase permet alors d'absorber cette chaleur de sorte que la température du dispositif puisse diminuer. Le matériau à changement de phase permet ainsi d'éviter que le dispositif ne surchauffe et éviter ainsi toute dégradation du dispositif

Composé à changement de phase

Le composé hybride organique/inorganique à changement de phase solide-solide est défini comme un composé comprenant une partie organique et une partie inorganique qui est notamment sous forme d'un sel inorganique. En particulier, ces composés comportent une partie organique et une partie inorganique qui sont liées de façon ionique, et ce, quelle que soit la forme du composé et même durant la phase de transition. Ce composé est stable sous ses différentes formes solides, et ce, jusqu'à une température d'environ 160°C. Avantageusement, ses propriétés de changement de phase solide-solide et sa stabilité sous la forme solide son intrinsèques au composé et liées à sa structure. Ainsi, il n'est pas nécessaire de lui adjoindre des additifs ou d'autres composés pour obtenir ces propriétés.

La partie inorganique peut comporter un métal de transition entouré de ligands anioniques et/ou neutres et un ou plusieurs cations. Les ligands sont de préférence anioniques. La partie organique peut être formée d'une ou de plusieurs chaines hydrocarbonées.

Le métal de transition peut être un métal divalent. De préférence, le métal de transition est choisi parmi le manganèse (Mn), le cuivre (Cu), le zinc (Zn), le fer (Fe), le cadmium (Cd), cobalt (Co), plomb (Pb) et le mercure (Hg). De façon encore plus préféré, le métal de transition est choisi parmi le cuivre et le zinc.

Les ligands anioniques peuvent être de préférence des atomes d'halogène ($Cl^-$, $Br^-$ ou $I^-$) ou des groupements nitrate ($NO_3^-$), chlorate ($ClO_3^-$), dihydrogénophosphate ($H_2PO_4^-$) ou hydrogénosulfate ($HSO_4^-$).

Les cations peuvent être de préférence des ions ammonium.

Les chaines hydrocarbonées peuvent comprendre de 4 à 18 atomes de carbone, être linéaires ou ramifiées, saturées ou insaturées mais non aromatiques, et peuvent être substituées fonctionnalisée.

Selon un mode de réalisation, le composé à changement de phase peut être de formule (I) :

$$(R_1R_2R_3NH)(R_4R_5R_6NH)MX_4 \qquad (I),$$

dans laquelle

- $R_1$, $R_2$, $R_3$, $R_4$, $R_5$, $R_6$ sont identiques ou différents, et représentent indépendamment un hydrogène ou une chaine hydrocarbonée monovalente saturée ou insaturée mais non aromatique, linéaire ou ramifiée, comportant de 4 à 18 atomes de carbone, la chaine hydrocarbonée pouvant être substituée ou non substituée,
- M est un métal de transition divalent choisi parmi le manganèse (Mn), le cuivre (Cu), le zinc (Zn), le fer (Fe), le cadmium (Cd) et le mercure (Hg), cobalt (Co), plomb (Pb), l'europium (Eu) et l'étain (Sn), et
- chaque X représente indépendamment un halogène, de préférence choisi parmi le chlore (Cl), le brome (Br), l'iode (I), un nitrate ($NO_3^-$), un chlorate ($ClO_3^-$), un dihydrogénophosphate ($H_2PO_4^-$) ou un hydrogénosulfate ($HSO_4^-$).

Selon une variante possible de la formule (I), au moins un des groupements $R_1$, $R_2$, $R_3$ est une chaine hydrocarbonée telle que précédemment définie. Selon une autre variante possible de la formule (I), au moins un des groupements $R_4$, $R_5$, $R_6$ est une chaine hydrocarbonée telle que précédemment définie. Selon encore une autre variante possible de la formule (I), au moins un des groupements $R_1$, $R_2$, $R_3$ est une chaine hydrocarbonée et au moins un des groupements $R_4$, $R_5$, $R_6$ est une chaine hydrocarbonée, les chaines carbonées étant telles que précédemment définies.

Selon une variante possible de la formule (I), au moins deux des groupements $R_1$, $R_2$, $R_3$ sont une chaine hydrocarbonée telle que précédemment définie. Selon une autre variante possible de la formule (I), au moins deux des groupements $R_4$, $R_5$, $R_6$ sont une chaine hydrocarbonée telle que précédemment définie. Selon encore une autre variante possible de la formule (I), au moins deux des groupements $R_1$, $R_2$, $R_3$ sont une chaine hydrocarbonée et au moins deux des groupements $R_4$, $R_5$, $R_6$ sont une chaine hydrocarbonée, les chaines carbonées étant telles que précédemment définies.

Lorsqu'un groupement ammonium $(R_1R_2R_3NH)^+$ et/ou $(R_4R_5R_6NH)^+$ comporte plusieurs chaines hydrocarbonées, elles peuvent être identiques ou différentes, de préférence identiques.

Selon une variante préférée de la formule (I), au moins un des groupements $R_1$, $R_2$, $R_3$ est un atome d'hydrogène et au moins un des groupements $R_4$, $R_5$, $R_6$ est un atome d'hydrogène.

Selon une autre variante préférée de la formule (I), chaque groupement ammonium $(R_1R_2R_3NH)^+$ et $(R_4R_5R_6NH)^+$ comporte un hydrogène et deux chaines hydrocarbonées telles que précédemment définies, de préférence deux chaines hydrocarbonées identiques.

De préférence, dans la formule (I), les deux groupements ammoniums $(R_1R_2R_3NH)^+$ et $(R_4R_5R_6NH)^+$ sont identiques.

Dans la présente invention, une chaîne hydrocarbonée monovalente est saturée (*i.e.* ne comprenant aucune insaturation ou liaison multiple), insaturée (*i.e.* comprenant au moins une double liaison ou une triple liaison, sans être aromatique), mais non aromatique. Une chaîne hydrocarbonée monovalente peut être cyclique ou acyclique (linéaire ou ramifiée), substituée ou non substituée. Une chaîne hydrocarbonée monovalente couvre notamment les groupements alkyle, cycloalkyle, alcényle, cycloalcényle, alcynyle ou cycloalcynyle, substitués ou non substitués, en $C_4$-$C_{18}$. De préférence, une chaîne hydrocarbonée monovalente est un groupe alkyle, cycloalkyle, alcényle, cycloalcényle, substitués ou non substitués, en $C_4$-$C_{18}$.

Par groupement « alkyle », on entend, au sens de la présente invention, une chaîne hydrocarbonée monovalente saturée, linéaire ou ramifiée, comportant de 4 à 18 atomes de carbone, de préférence comportant de 6 à 18 atomes de carbone, et de manière encore plus préférée de 8 à 16 atomes de carbone.

Par groupement « cycloalkyle », on entend, au sens de la présente invention, une chaîne hydrocarbonée saturée monovalente cyclique, comportant 4 à 18 atomes de carbone cycliques. Un cycloalkyle peut être monocyclique, bicyclique ou polycyclique.

Par groupement « alcényle », on entend, au sens de la présente invention, une chaîne hydrocarbonée monovalente, linéaire ou ramifiée, comportant au moins une double liaison et comportant de 4 à 18 atomes de carbone.

Par groupement « cycloalcènyle », on entend, au sens de la présente invention, une chaîne hydrocarbonée monovalente cyclique, comportant 4 à 18 atomes de carbone cycliques et au moins une double liaison cyclique.

Par groupement « alcynyle », on entend, au sens de la présente invention, une chaîne hydrocarbonée monovalente, linéaire ou ramifiée, comportant au moins une triple liaison et comportant de 4 à 18 atomes de carbone.

Par groupement « cycloalcynyle », on entend, au sens de la présente invention, une chaîne hydrocarbonée monovalente cyclique, comportant de 4 à 18 atomes et au moins une triple liaison cyclique. Un cycloalcynyle peut être monocyclique, bicyclique ou polycyclique.

Selon un mode de réalisation préféré, le composé à changement de phase peut être de formule (II) :

$$(R_1NH_3)(R_4NH_3)MX_4 \qquad (II),$$

dans laquelle

- $R_1$ et $R_4$ identiques ou différents, représentent indépendamment une chaine hydrocarbonée monovalente saturée ou insaturée mais non aromatique, linéaire ou ramifiée, comportant de 4 à 18 atomes de carbone, la chaine hydrocarbonée pouvant être substituée ou non substituée,

- M est un métal de transition divalent choisi parmi le manganèse (Mn), le cuivre (Cu), le zinc (Zn), le fer (Fe), le cadmium (Cd) et le mercure (Hg), cobalt (Co), plomb (Pb), l'europium (Eu) et l'étain (Sn), et
- chaque X représente indépendamment un halogène, de préférence choisi parmi le chlore (Cl), le brome (Br), et l'iode (I), un nitrate ($NO_3^-$), un chlorate ($ClO_3^-$), un dihydrogénophosphate ($H_2PO_4^-$) ou un hydrogénosulfate ($HSO_4^-$).

Selon un mode de réalisation préféré, le composé à changement de phase est de formule (III) :

$$(C_nH_{2n+1}NH_3)_2MX_4 \qquad \text{(III)},$$

dans laquelle

- n a une valeur allant de 4 à 18,
- M est un métal de transition divalent choisi parmi le manganèse (Mn), le cuivre (Cu), le zinc (Zn), le fer (Fe), le cadmium (Cd) et le mercure (Hg), cobalt (Co), plomb (Pb), l'europium (Eu) et l'étain (Sn) et
- chaque X représente indépendamment un halogène, de préférence choisi parmi le chlore (Cl), le brome (Br) et l'iode (I), un nitrate ($NO_3^-$), un chlorate ($ClO_3^-$), un dihydrogénophosphate ($H_2PO_4^-$) ou un hydrogénosulfate ($HSO_4^-$).

Selon un mode de réalisation préféré, le composé à changement de phase peut être de formule (III) dans laquelle :

- la chaine hydrocarbonée est linéaire,
- M est choisi parmi le cuivre (Cu), le manganèse (Mn) et le zinc (Zn), et
- chaque X représente indépendamment un halogène, choisi parmi le chlore (Cl), le brome (Br) et l'iode (I), ou un nitrate ($NO_3^-$).

Pour les composés de formule (I), (II) et (III), la longueur de la chaine hydrocarbonée comporte de préférence de 6 à 18 atomes de carbone, et de manière plus préférée de 8 à 16 atomes de carbone.
Selon un exemple de réalisation, le composé à changement de phase est choisi parmi le bis(n-dodecylammonium)tétrachlorocuprate, le bis(n-dodecylammonium)tétrachlorozinate, le bis(n-dodecylammonium)tétrachloromanganate,, ou un mélange de ceux-ci.
Les composés à changement de phase solide-solide, sous forme de poudre ou de masse solide, ont la propriété d'adopter une première structure solide ou une deuxième structure solide en fonction de la température à laquelle ils sont soumis. Ils ont notamment la propriété d'adopter la première structure solide lorsqu'ils sont soumis à une température inférieure à leur température de transition (ou température de changement de phase) et d'adopter la deuxième structure solide lorsqu'ils sont soumis à une température supérieure à leur température de transition, la température de transition étant la température de passage de la première structure à la deuxième structure solide. Ces composés peuvent être sous la forme de poudre ou sous la forme d'une masse solide.
En particulier, les composés à changement de phase solide-solide présentent plusieurs températures de changement de phase correspondant chacune à un changement ou une transition de phase. Cependant, un des changements de phase implique plus d'énergie que les autres et est considéré comme le changement de phase principal décrit ci-dessus. Ainsi, dans la présente description, lorsqu'on parle de « la température de changement de phase ou de transition de phase », on parle de la température de ce changement principal.
La première structure solide et la deuxième structure solide diffèrent par exemple par leur structure cristallographique ; par le nombre de liaisons ioniques présentes dans le composé à changement de phase ; par le nombre de liaisons faibles présentes dans le composé à changement de phase, les liaisons faibles étant des liaisons hydrogènes ou des liaisons de van der Waals.
Les composés à changement de phase solide-solide selon la présente invention présentent une température de transition (ou température de changement de phase) ayant une valeur comprise dans une gamme allant de 20°C à 150°C, et de préférence dans une gamme allant de 40°C à 120 °C. La température de transition peut être d'autant plus haute que la chaine hydrocarbonée est longue.
Lorsque le composé à changement de phase solide-solide, sous forme de poudre ou de masse solide, est à une température inférieure à sa température de transition et qu'il est chauffé, il absorbe cette chaleur, ce qui a pour effet d'augmenter progressivement sa température, tout en laissant le composé sous la forme de sa première structure solide. Lorsque sa température atteint sa température de transition, il continue à absorber de la chaleur tout en restant à la même température et en passant progressivement de la première structure solide à la deuxième structure solide. Une fois qu'il est entièrement sous forme de sa deuxième structure solide, il va continuer à absorber la chaleur tout en restant sous la forme de sa deuxième structure solide et sa température va donc progressivement augmenter.

Lorsque le composé a été chauffé au-delà de sa température de transition et qu'il est soumis à une température inférieure à sa température de transition, il va évacuer la chaleur et sa température va redescendre en suivant le processus inverse que lorsqu'il est chauffé.

Avantageusement, le composé à changement de phase solide-solide peut être chauffé et refroidit un grand nombre de fois sans que ses propriétés ne soient altérées. En effet, le composé n'est altéré que lorsqu'il est soumis à une température trop élevée, notamment à une température de 160°C ou plus.

On notera que les composés généralement utilisés dans la littérature pour leur propriété de changement de phase solide-solide et qui ne rentrent pas dans la catégorie des composés hybrides organique/inorganique à changement de phase solide-solide tel que décrits dans l'invention ont un comportement différent lors de la montée en température. Une fois passée la température de transition solide-solide, ceux-ci se dégradent en effet rapidement si la température continue de s'élever. Ainsi de tels matériaux sont détruits ou subissent des dégâts irrémédiables en cas d'augmentation de la température supérieure à 15°C au-delà de leur température de transition solide-solide.

A contrario, les composés hybrides organique/inorganique à changement de phase solide-solide tel que décrits dans l'invention ont une tenue bien supérieure en température. En particulier, ils ne se dégradent qu'à des températures bien supérieures à la température de changement de phase.

Par ailleurs, le composé à changement de phase peut présenter une conductivité thermique ayant une valeur comprise dans une gamme allant de 0,15 Wm$^{-1}$K$^{-1}$ (watts par mètre et par Kelvin) à 2,50 Wm$^{-1}$K$^{-1}$, de préférence dans une gamme allant de 0,20 Wm$^{-1}$K$^{-1}$ à 1,00 Wm$^{-1}$K$^{-1}$, et de manière plus préférée dans une gamme allant de 0,20 Wm$^{-1}$K$^{-1}$ à 0,50 Wm$^{-1}$K$^{-1}$. De préférence, pour un composé à changement de phase donné, la conductivité thermique lorsque le composé est sous la forme de sa première structure solide est inférieure à sa conductivité thermique lorsqu'il est sous la forme de sa deuxième structure solide. La conductivité thermique est mesurée par la méthode dite par flash lumineux connue sous l'anglicisme Laser Flash Analysis (LFA) et qui relie la diffusivité du matériau ($\alpha$) à sa conductivité thermique ($\lambda$) via sa densité ($\rho$) et sa capacité calorifique ($C_p$) (pastilles d'environ 250mg, h=2-3mm, diamètre 10mm). La conductivité thermique est le produit de la densité, de la diffusivité thermique et de la chaleur spécifique (voir équation 1 ci-dessous).

$$\text{Equation 1} : \lambda = \rho \times C_p \times \alpha$$

Cette conductivité thermique supérieure dans la seconde structure solide par rapport à la première structure solide favorise typiquement le transport de chaleur dans une pièce comportant le composé à changement de phase et qui est chauffée à partir d'une de ses extrémités et comportant un front de transition de phase. En particulier, le changement de phase peut avoir tout d'abord lieu à partir du dispositif dont il faut réguler la température puis se propager dans la pièce de régulation thermique. Le changement de température, et en particulier le front de transition de phase, se déplace ainsi dans la pièce jusqu'à atteindre une ou plusieurs extrémités à partir de laquelle la température réalise un échange avec l'extérieur du système, notamment l'air ambiant.

Matériau à changement de phase

Le matériau à changement de phase solide-solide comporte le composé à changement de phase solide-solide et peut comprendre en outre un ou plusieurs additifs.

Selon un mode de réalisation possible, le matériau à changement de phase peut ne comporter que les ou les composés à changement de phase.

Le ou les additifs peuvent être choisis parmi des charges, des pigments, des charges de renforts telles que des fibres (verres, carbone ou autre), des nanodiamants, et un de leurs mélanges. De préférence, les additifs ne modifient pas ou modifient peu les propriétés du composé à changement de phase solide-solide. Ainsi, les propriétés décrites précédemment pour le composé à changement de phase s'appliquent également au matériau à changement de phase.

En particulier, le matériau à changement de phase solide-solide présente une température de transition identique à celle du composé à changement de phase qu'il contient, et notamment une température ayant une valeur comprise dans une gamme allant de 20°C à 150°C, de préférence dans une gamme allant de 40°C à 120 °C.

Selon un mode de réalisation possible, le matériau à changement de phase solide-solide peut comporter une première partie comprenant un premier composé à changement de phase et une deuxième partie comprenant un deuxième composé à changement de phase différent du premier composé à changement de phase. Selon ce mode de réalisation, le premier composé présente une première température de transition et le deuxième composé présente une deuxième température de transition différente de la première température de transition.

Un tel matériau peut ainsi permettre d'absorber une certaine chaleur avec sa première partie et une chaleur plus importante ou moins importante avec sa deuxième partie. Un tel matériau peut par exemple être utilisé pour réguler la température d'un dispositif comportant des zones plus chaudes que d'autres.

Selon une variante de réalisation possible, le matériau à changement de phase solide-solide peut comporter une pluralité de parties différentes comportant chacune un composé à changement de phase différents d'une ou de plusieurs autres parties.

Lorsque le matériau à changement de phase solide-solide comporte plusieurs parties, les différentes parties sont jointives les unes par rapport aux autres de sorte que le matériau est continu. Un matériau à changement de phase comportant plusieurs parties peut par exemple former un gradient de températures selon une direction donnée, une partie comportant un composé ayant une température plus faible qu'une partie située en amont et plus élevée qu'une partie située en aval.

Le composé formant chaque partie peut avoir une formule choisie parmi la formule (I), la formule (II), la formule (III), le bis(n-dodecylammonium)tétrachlorocuprate et le bis(n-dodecylammonium)tétrachlorozinate, bis(n-dodecylammonium)tétrachloromanganate, le métal, l'atome d'halogène et la longueur de chaine hydrocarbonée étant choisis en fonction de la température de transition souhaitée. La température de transition peut notamment être choisie de sorte à être proche de la température pouvant être atteinte par le dispositif dont la température est à réguler, et notamment à abaisser. Par exemple, si le dispositif atteint une température de 60°C, on choisit un composé à changement de phase solide-solide ayant une température de transition situé dans la gamme allant de 50°C à 70°C, de préférence dans la gamme allant de 50°C à 65°C.

### Pièce de régulation

La pièce de régulation comporte le matériau à changement de phase sous forme massive, ce qui signifie que le matériau est homogène et continu. Le matériau n'est par exemple pas sous forme de poudre ni de poudre compactée. Lorsque le matériau comporte plusieurs parties comportant chacune un composé à changement de phase différent de celui des autres parties, chaque partie est homogène et continue et les différentes parties sont jointives entre elles et indissociables.

Selon un mode de réalisation possible, la pièce de régulation peut être une pièce composite comportant une première portion en matériau à changement de phase solide-solide tel que précédemment décrit et une ou plusieurs autres portion(s) dans un autre matériau, comme par exemple du métal, de la céramique, un polymère, ou un mélange ceux-ci.

Selon ce mode de réalisation, la pièce comporte le matériau à changement de phase sous forme massive permettant la régulation de la température d'un dispositif auquel elle est associée, et également des portions comportant un matériau autre qu'un matériau à changement de phase et ayant donc une autre fonction que celle de réguler la température.

### Système

Dans le système, la pièce de régulation comporte au moins une portion en matériau à changement de phase susceptible de réaliser un transfert thermique avec le dispositif susceptible de changer de température. De préférence, le dispositif génère de la chaleur lors de son fonctionnement et la pièce de régulation permet d'absorber cette chaleur.

De préférence, la pièce de régulation thermique est en contact, direct ou indirect, avec la ou les zones du dispositif qui génèrent de la chaleur qu'il faut réguler. Lorsque le contact entre la pièce de régulation et le dispositif est indirect, il se fait par l'intermédiaire d'une pièce secondaire qui est suffisamment conductrice thermiquement pour permettre le transfert thermique entre la pièce de régulation et le dispositif. De préférence, la pièce secondaire présente alors une conductivité thermique au moins égale à la conductivité thermique de la pièce de régulation thermique.

Par ailleurs, la pièce de régulation thermique est en outre configurée pour réaliser un transfert thermique avec l'extérieur du système, notamment avec l'air ambiant, un fluide de refroidissement, ou une pièce distincte du système. Ainsi, la pièce de régulation absorbe de la chaleur venant du dispositif qui monte en température, puis évacue cette chaleur vers l'extérieur du système de sorte à refroidir le système. Selon un mécanisme inverse, la pièce de régulation thermique pourrait aussi servir à réchauffer le dispositif au moyen d'une source de chaleur extérieure au système.

La pièce de régulation thermique peut stocker la chaleur ou l'évacuer vers l'extérieur du système. L'extérieur du système est notamment l'air ambiant qui entoure le système.

La pièce de régulation peut avoir toute forme permettant de s'adapter à la forme du dispositif, et notamment de s'adapter à la forme de la ou des zones du dispositif dont il faut réguler la température. La pièce peut par exemple comporter des zones étendues permettant de couvrir au moins une grande partie de la zone du dispositif dont la température est à réguler.

Lorsque la pièce de régulation thermique a également pour fonction d'évacuer la chaleur absorbée vers l'extérieur du système, et notamment vers l'air ambiant entourant le système, elle peut comporter des zones étendues d'échange avec l'extérieur, comme par exemple des ailettes.

Lorsque la pièce de régulation a pour fonction de stocker de la chaleur, elle peut comporter une ou plusieurs zones d'échange de chaleur avec le dispositif et être en outre recouverte d'un matériau isolant thermique sur les autres zones.

Les zones d'échange de chaleur, que ce soit les zones d'absorption de chaleur provenant du dispositif ou d'évacuation de chaleur vers l'extérieur du dispositif, sont au moins en partie formées par le matériau à changement de phase solide-solide.

Selon un mode de réalisation préféré, le dispositif est une batterie et la pièce de régulation est configurée pour absorber la chaleur émise par la batterie. La batterie peut par exemple être une batterie au lithium.

La batterie peut comprendre une ou plusieurs cellules de stockage et peut comporter une ou plusieurs pièce(s) de régulation thermique entourant la ou les cellules de sorte à former un contact avec la ou les cellules et également un contact avec l'extérieur de la batterie. Lorsque la batterie comporte plusieurs cellules, une ou plusieurs pièces de régulation peuvent réaliser un contact avec chaque cellule, ou une pièce de régulation peut réaliser un contact avec plusieurs cellules simultanément. La batterie peut aussi comporter plusieurs pièces de régulation thermique réalisant chacune un contact avec plusieurs cellules ou toutes les cellules de la batterie.

Le système peut en outre comporter des pièces de régulation additionnelles qui ne sont pas en contact avec une cellule de la batterie mais qui réalisent un contact avec une ou plusieurs pièce(s) de régulation qui sont, elles, en contact avec au moins une cellule de la batterie.

Lorsque le système comporte une pluralité de pièces de régulation thermique, chaque pièce de régulation comporte un matériau à changement de phase, le matériau à changement de phase d'une pièce étant identique ou différent du matériau à changement de phase de chaque autre pièce. En particulier, lorsqu'il est indiqué qu'un matériau à changement de phase est identique ou différent d'un autre matériau à changement de phase, cela signifie que le matériau comprend un composé à changement de phase qui est respectivement identique ou différent du composé à changement de phase de l'autre matériau.

Lorsque le système comporte une pluralité de pièces de régulation thermique, le composé à changement de phase de chaque pièce de la pluralité de pièces a pour formule une formule choisi parmi la formule (I), la formule (II), la formule (III), le bis(n-dodecylammonium)tétrachlorocuprate, le bis(n-dodecylammonium)tétrachlorozinate, le bis(n-dodecylammonium)tétrachloromanganate, ou un mélange de ceux-ci.

Procédé de fabrication de la pièce de régulation

La pièce de régulation thermique peut être fabriquée par tout procédé thermique de mise en forme amenant le matériau ou le composé à une température T1 de mise en forme. Ce procédé peut donc être par exemple un procédé de moulage, d'injection, ou de fabrication additive.

Avantageusement, le procédé utilise une propriété des composés hybrides organique/inorganique à changement de phase précédemment décrits. De façon surprenante, les inventeurs ont en effet identifié que les composés hybrides organique/inorganique à changement de phase solide-solide tels précédemment décrits présentaient une température Tr notablement supérieure à la température de changement de phase Tt à partir de laquelle ces composés subissaient un ramollissement, tout en restant dans un état solide et sans subir aucune altération de leurs propriétés.

Cette température Tr, appelée « température de ramollissement » dépend du composé, mais est, dans tous les cas pour un composé donné, une température supérieure à la température de changement de phase Tt d'au moins 15°C. La température de ramollissement Tr correspond donc, pour un composé donné, à une température pour laquelle, habituellement, les composés à changement de phase solide-solide se dégradent.

Dans le cas des composés hybrides organique/inorganique à changement de phase solide-solide décrits dans l'invention, cette température Tr permet un ramollissement de ceux-ci sans dégradation, leur intégrité et propriétés restant conservées une fois effectué le retour à une température plus basse.

La température de ramollissement, ou température à partir de laquelle un matériau comportant un composé à changement de phase présente un état ramolli, peut présenter une valeur comprise dans une gamme allant de 35°C à 165°C, de préférence de 55 à 135°C. Un matériau comportant un composé à changement de phase reste sous forme massive même lorsqu'il est dans un état ramolli. Par ailleurs, dans cet état ramolli, le matériau garde sa forme solide s'il n'est pas soumis à une contrainte mécanique. En revanche, s'il est soumis à une contrainte mécanique, comme par exemple s'il est soumis à une pression, sa forme solide peut changer mais il reste à l'état de pièce massive.

Lorsque les composés sont dans leur état solide, c'est à dire à une température inférieure à la température de ramollissement leur raideur mécanique présente une valeur comprise dans une gamme allant de $10^5$ à $10^9$ Pa Cette raideur (ou rigidité) est la même lorsqu'ils sont sous la forme de leur première structure solide ou de leur deuxième structure solide.

En revanche, lorsqu'ils sont dans leur état ramolli, leur raideur mécanique présente une valeur au moins 20% inférieure à leur raideur dans leur première ou seconde structure solide, de préférence au moins 30% inférieure, et de manière encore plus préférée au moins 40 %.

La raideur (ou module d'Young) peut être mesurée par la méthode d'analyse dynamique mécanique, connue sous l'anglicisme Dynamic Mechanical Analysis (DMA), sur un échantillon cylindrique d'un diamètre de 10,03 mm et d'une longueur de 5,55 mm et au moyen d'un instrument commercialisé sous le nom de DMA+ 1000 de la société Métravib. La mesure a été réalisée à une fréquence 1 Hz, avec une force statistique de 10 N, une force dynamique de 0,1 N et une vitesse de chauffage de 3°C/min.

L'invention a pour autre objet un procédé de fabrication de la pièce de régulation thermique telle que précédemment décrite comporte ainsi les étapes suivantes :

- S1 : chauffer une composition initiale comprenant un matériau à changement de phase solide-solide à une température T1 supérieure ou égale à la température de ramollissement Tr du matériau, le matériau comportant un composé hybride organique/inorganique à changement de phase solide-solide tel que précédemment décrit présentant un état ramolli à la température T1, pour obtenir une composition ramollie qui présente une forme initiale ;
- S2 : mettre en forme de la composition ramollie obtenue dans l'étape S1 dans une forme finale différente de la forme initiale ; et
- S3 : refroidir la composition dans sa forme finale pour obtenir la pièce massive, la pièce massive présentant des propriétés de changement de phase solide-solide et présentant une température de changement de phase Tt' identique à une température de changement de phase Tt de la composition initiale.

Une température de changement de phase Tt' pour la pièce massive qui est identique à température de changement de phase Tt de la composition initiale signifie que sa valeur est égale à Tt ± 10°C.

La température de ramollissement d'un composé peut être supérieure à la température de changement de phase Tt de ce composé, de préférence supérieure d'au moins 15°C à la température de changement de phase de ce composé.

Ce procédé permet de former une pièce massive ayant la forme souhaitée à partir d'une composition initiale et ce, d'une manière simple et efficace et surtout, sans atteindre ou même approcher une température à laquelle le matériau à changement de phase se dégrade.

La composition initiale peut être sous forme de poudre ou sous une forme massive dont la forme est à modifier.

Lorsque la composition initiale est sous forme de poudre, la poudre comprend des particules dont la taille peut être comprise entre 0,1 micromètre ($\mu$m) et 3 millimètres (mm), de préférence entre 0,5 $\mu$m et 1 mm, et de manière particulièrement préférée entre 1 $\mu$m et 700 $\mu$m. La taille des particules peut par exemple être d'environ 500 $\mu$m.

La poudre comporte de préférence des particules de forme de flocons. Dans la présente description, lorsque les particules sont sous forme de flocons, leur taille est donnée en diamètre de sphère équivalente.

La forme des particules de poudre peut être déterminée selon la méthode de microscopie électronique à balayage ou à transmission.

Lorsque la composition initiale est une pièce massive, elle présente une forme initiale qui est à modifier pour obtenir la forme souhaitée.

Lorsque le procédé est utilisé pour fabriquer une pièce massive comprenant plusieurs matériaux à changement de phase, une composition initiale correspondant à chaque matériau peut être utilisée.

Selon un mode de réalisation possible, la pièce massive est fabriquée par moulage.

Selon ce mode de réalisation, l'étape S1 comporte la mise en place de la composition dans une moule ou une matrice définissant un volume ayant la forme de la pièce massive finale.

Le moule est alors refermé et la composition est portée et maintenue à une température T1 de sorte que le matériau atteigne un état dans lequel il est ramolli.

L'étape S2 comporte la mise sous pression du matériau dans le moule tout en maintenant la température T1. La pression peut avoir une valeur comprise dans une gamme allant de 0,2 MPa à 10 MPa, de préférence de 0,5 MPa à 10 MPa, et de manière encore plus préférée de 0,7 MPa à 10 MPa.

La pression peut être appliquée pendant une durée pouvant aller de quelques secondes à quelques minutes.

L'étape S3 consiste à refroidir la pièce puis à la sortir du moule pour obtenir la pièce massive finale.

Lorsque ce procédé est utilisé pour réaliser une pièce massive comprenant différents matériaux à changement de phase, les différents matériaux peuvent être mis en place simultanément dans le moule de manière côte à côte et/ou superposée. La température T1 est alors choisie pour placer les différents matériaux dans un état ramolli simultanément. Lorsque la pression est appliquée, les différents matériaux se lient de manière à former une seule pièce sans discontinuités. Il est également possible d'appliquer successivement différentes températures de ramollissement correspondant chacune à la température de ramollissement d'un des matériaux.

Selon une variante de réalisation possible, les différents matériaux peuvent être moulés indépendamment pour obtenir une pièce de chacun des matériaux et les différentes pièces sont alors assemblées. Les pièces peuvent alors être maintenues ensemble par un maintien mécanique ou être jointes par compression à chaud.

Selon un autre mode de réalisation possible, la pièce massive est fabriquée par injection pouvant être réalisée sous vide, sous pression ou à pression atmosphérique.

Selon ce mode de réalisation, l'étape S1 comporte le chauffage de la composition à une température Ti qui ne se situe pas dans la plage de température de ramollissement du matériau et qui a pour but de s'assurer que tout le matériau est à une température homogène.

La composition est alors introduite dans la trémie de la presse à injection puis portée et maintenue à la température T1 de sorte que le matériau atteigne un état dans lequel il est ramolli. La composition est alors injectée dans un fourreau tout en maintenant la température T1.

L'étape S2 comporte l'introduction de la composition dans un moule au moyen d'une vis sans fin ou d'un piston. Dans le cas d'une injection sous pression, la composition dans le moule atteint, lors de cette étape, une pression allant de 200 bars à 1500 bars, de préférence de 400 bars à 1200 bars.

L'étape S3 consiste à refroidir la pièce puis à la sortir du moule pour obtenir la pièce massive finale.

Lorsque ce procédé est utilisé pour réaliser une pièce massive comprenant différents matériaux à changement de phase, les différents matériaux peuvent être injectés dans le moule les uns après les autres ou simultanément. La température T1 est alors choisie pour placer les différents matériaux dans un état ramolli. Lorsque la pression est appliquée, les différents matériaux se lient de manière à former une seule pièce massive sans discontinuités.

Selon une variante de réalisation possible, les différents matériaux peuvent être fabriqués indépendamment pour obtenir une pièce de chacun des matériaux et les différentes pièces sont alors assemblées. Les pièces peuvent alors être maintenues ensemble par un maintien mécanique ou être jointes par compression à chaud.

D'autres procédés thermiques de mise en forme peuvent être utilisés pour fabriquer ou assembler les pièces à changement de phase solide-solide, comme le surmoulage, ou la fabrication additive.

## DESCRIPTION DES FIGURES

[Fig. 1] représente une vue schématique et en perspective d'un moule et les étapes d'un procédé de fabrication d'une pièce de régulation thermique utilisant ce moule selon un mode de réalisation de l'invention ;

[Fig .2] représente un logigramme d'un procédé selon un mode de réalisation de l'invention ;

[Fig. 3a] représente une vue schématique et en perspective d'un système selon un mode de réalisation de l'invention ;

[Fig. 3b] représente une vue schématique en coupe longitudinale du système de la figure 3a ;

[Fig. 3c] représente une vue schématique de côté du système de la figure 3a ; et

[Fig. 4] représente un graphique montrant la comparaison entre la température d'une batterie comprenant des pièces de régulation thermique de la figure 1 et d'une batterie ne comprenant aucune pièce de régulation.

## DESCRIPTION DETAILLEE DE L'INVENTION

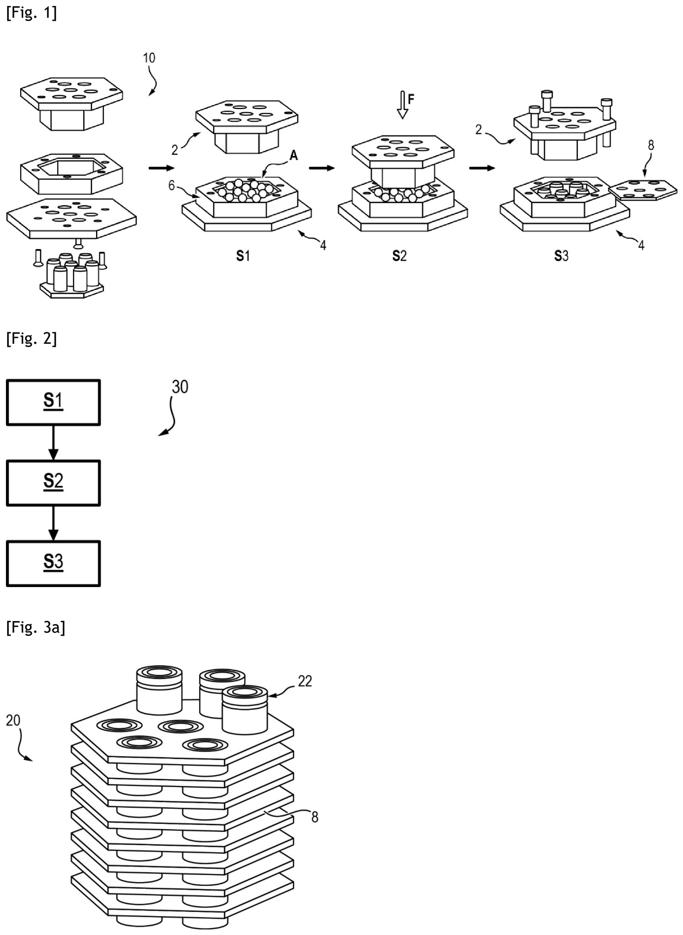

La figure 1 représente une matrice 10 (ou moule) utilisable dans un procédé de fabrication par moulage selon un mode de réalisation de l'invention. La matrice 10 comporte une première partie 4 et une deuxième partie 2 qui s'insère dans la première partie 4 pour former un espace 6 pouvant accueillir une composition A.

Selon un procédé 30 représenté à la figure 2, dans une première étape S1, le procédé comporte la mise en place d'une composition dans l'espace 6 du moule puis la fermeture du moule. Puis, dans une étape S2, la composition est portée à une température T1 puis une force F est exercée au moyen d'une presse hydraulique non représentée. La force F presse la première et la deuxième parties 2 et 4 l'une vers l'autre de sorte à comprimer la composition A positionnée dans l'espace 6 et former une pièce massive 8.

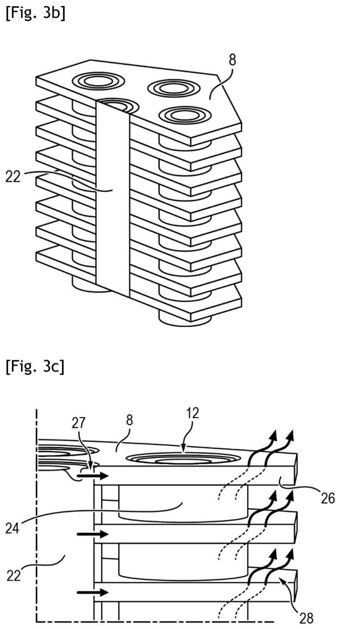

Dans une étape S3, la matrice 10 est ouverte en séparant la première et la deuxième parties 2 et 4 l'une de l'autre pour refroidir la pièce massive 8 qui est alors sortie de moule et qui peut être utilisée comme pièce de régulation thermique dans un système 20 représenté sur les figures 3a à 3c.

Les figures 3a-c représentent un système 20 qui est une batterie comprenant sept cellules de stockage 22 qui forment chacune un dispositif qui chauffe lors du fonctionnement de la batterie 20.

Dans ce mode de réalisation particulier de l'invention, le système 20 comporte par exemple huit pièces de régulation 8 de forme identique et qui comportent chacune sept orifices traversants 12 destinés à accueillir les sept cellules 22.

La batterie 20 comporte en outre par exemple sept pièces de régulation additionnelles 24 qui permettent de relier entre elles les pièces de régulation 8. Les pièces de régulation additionnelles 24 sont, comme les pièces de régulation 8, formées d'un matériau à changement de phase solide-solide.

Le matériau à changement de phase des pièces de régulation 8 peut-être identique ou différent de celui des pièces de régulation additionnelles 24. Par ailleurs, les pièces de régulation 8 peuvent comporter le même matériau à changement de phase ou un matériau différent. De même, les pièces de régulation additionnelles 24 peuvent comporter le même matériau à changement de phase ou un matériau différent. Il est ainsi possible de mettre en place un gradient d'absorption de chaleur.

Les pièces de régulation 8, lorsqu'elles sont mises en place autour des cellules 22 forment des ailettes 26 avec l'air ambiant autour de la batterie. Ainsi, comme représenté sur la figure 3c, la chaleur générée par les cellules 22 est absorbée par les pièces de régulation 8 et 24 selon les flèches 27. Les pièces de régulation peuvent ainsi passer d'une première structure solide à une deuxième structure solide lorsque la température dépasse la température de transition du matériau. La chaleur peut ensuite être évacuée vers l'air ambiant de la batterie 20 par les ailettes 26 qui offrent une grande surface d'échange de chaleur avec l'air extérieur selon les flèches 28.

D'autres alternatives pourront être imaginées. Ainsi, le système peut comporter un nombre quelconque de pièces de régulation thermique, et plus particulièrement ne comprendre qu'une pièce de régulation thermique, par exemple une unique ailette, traversée par les différentes cellules.

De même, le ou les pièces de régulation thermique peuvent n'être liées chacune qu'à une unique cellule, c'est-à-dire ne disposer que d'un orifice traversant dans lequel une cellule est disposée. L'assemblage des différentes cellules en une batterie pouvant alors s'effectuer par des moyens annexes de maintien mécanique.

Procédé de préparation par moulage d'une pièce en matériau à changement de phase en bis(n-dodecylammonium) tétrachlorocuprate (composé A)

Une première pièce massive 8 comprenant le composé A a été fabriquée en utilisant une presse hydraulique de référence « Calver » avec plateaux chauffants qui présente une capacité de pression d'au moins 8 tonne-force, un système de chauffe pouvant maintenir une température de 80°C, et une matrice 10 représentée sur la figure 1 qui comprend une surface intérieure de 2460mm$^2$, cette surface intérieure correspond à la surface de la pièce à former.

25 g de bis(n-dodecylammonium)tétrachlorocuprate synthétisé par mélange des alkyl amines correspondant aux groupements ammonium du composé A avec leur sel métallique en conditions acides (HCl) sont placés dans la matrice 10. Le composé A est sous forme de poudre comprenant des particules ayant une taille de 20$\mu$m. Pour ce composé, l'état de ramollissement commence à une température de 70°C.

Dans une étape S1, la matrice est alors fermée et la composition A est chauffée à une température de 80°C à laquelle le composé est dans un état ramolli. Le chauffage est maintenu pendant 10 minutes pour assurer une homogénéité de température pour toute la composition.

Dans une étape S2, une pression de 1,6 tonne-force est alors appliquée et maintenue pendant 15 minutes tout en maintenant la température de 80°C.

La pression est alors enlevée et la première pièce massive 8 est laissée refroidir dans une étape S3.

La première pièce massive 8 présente une rigidité de 1GPa, une température de transition de 55°C, et une conductivité thermique de 0,236W/m/K.

Procédé de préparation par moulage d'une pièce en matériau à changement de phase en bis(n-dodecylammonium) tétrachlorozinate

Une deuxième pièce massive est comprenant le composé B est fabriqué avec le même dispositif que la première pièce massive 8.

25 g de bis(n-dodecylammonium)tétrachlorozinate synthétisé par mélange des alkyl amines correspondant aux groupements ammonium du composé B avec leur sel métallique en conditions acides (HCl) sont placés dans la matrice 10. Le composé A est sous forme de poudre comprenant des particules ayant une taille de 20$\mu$m. Pour ce composé, l'état de ramollissement commence à une température de 100°C.

Dans une étape S1, la matrice 10 est alors fermée et la composition B est chauffée à une température de 100°C à laquelle le composé est dans un état ramolli. Le chauffage est maintenu pendant 8 minutes pour assurer une homogénéité de température pour toute la composition.

Dans une étape S2, une pression de 1,6 tonne-force est alors appliquée et maintenue pendant 1 minute tout en maintenant la température de 100°C.

La pression est alors enlevée et la première pièce massive 8 est laissée refroidir dans une étape S3.

La deuxième pièce massive présente une rigidité de 1GPa, une température de transition de 85°C, et une conductivité thermique de 0,505 W/m/K.

Procédé de préparation par injection d'une pièce en matériau à changement de phase en bis(n-dodecylammonium) tétrachlorocuprate (composé A)

La démonstration de faisabilité de la fabrication d'une troisième pièce massive a été effectué par la préparation d'une éprouvette matériau comprenant le composé A en utilisant un procédé d'injection. 0,25 g de la même poudre que pour la première pièce massive 8 ont été utilisés.

Une force de serrage de 140 kN a été appliquée à l'aide d'un moule à microtraction Ep. Le processus d'injection a nécessité des réglages de température spécifiques dans quatre zones de la vis et du moule. Les températures de la vis sont de 70°C dans la trémie lors de l'étape S1 et de 120°C dans la buse lors de l'étape S2.

Pendant la phase de dosage, une contre-pression de 5 bars et une vitesse de rotation de la vis de 110 mm/s ont été appliquées, avec un volume de dosage de 3 cm$^3$. Aucune décompression n'a été appliquée avant ou après le dosage. La phase d'injection a consisté en une pression dynamique de 1000 bars avec un débit de 20 cm$^3$/s et un volume dynamique de 1,3 cm$^3$, suivie d'une pression de maintien de 500 bars pendant 2 secondes. La durée du cycle complet d'injection est de 14 secondes.

La pression est alors enlevée et l'éprouvette sous forme de pièce massive est laissée refroidir dans une étape S3.

L'éprouvette présente une rigidité de 1GPa, une température de transition de 55°C, et une conductivité thermique de 0,236W/m/K.

Procédé de préparation par injection d'une pièce en matériau à changement de phase en bis(n-dodecylammonium) tétrachlorozinate (composé B)

La démonstration de faisabilité de la fabrication d'une quatrième pièce massive a été effectuée par la fabrication d'une éprouvette matériau comprenant le composé B en utilisant un procédé d'injection. 0,25g de la même poudre que pour la deuxième pièce massive ont été utilisés.

Une force de serrage de 140 kN a été appliquée à l'aide d'un moule à microtraction Ep. Le processus d'injection a nécessité des réglages de température spécifiques dans quatre zones de la vis et du moule. Les températures de la vis sont de 120°C dans la trémie lors de l'étape S1 et de 100°C dans la buse lors de l'étape S2.

Pendant la phase de dosage, une contre-pression de 5 bars et une vitesse de rotation de la vis de 110 mm/s ont été appliquées, avec un volume de dosage de 3 cm$^3$. Aucune décompression n'a été appliquée avant ou après le dosage. La phase d'injection a consisté en une pression dynamique de 1000 bars avec un débit de 20 cm$^3$/s et un volume dynamique de 1,3 cm$^3$, suivie d'une pression de maintien de 500 bars pendant 2 secondes

La pression est alors enlevée et l'éprouvette est laissée refroidir dans une étape S3.

L'éprouvette présente une rigidité de 1GPa, une température de transition de 85°C, et une conductivité thermique de 0,505 W/m/K.

Tests de régulation sur une batterie

La première pièce massive a été utilisée comme pièce de régulation 28 dans la batterie 20 des figures 3a à 3c.

La température de la surface des cellules 22 et du cœur des cellules 22 a été mesurée lors du fonctionnement de la batterie pour une durée de 40 min.

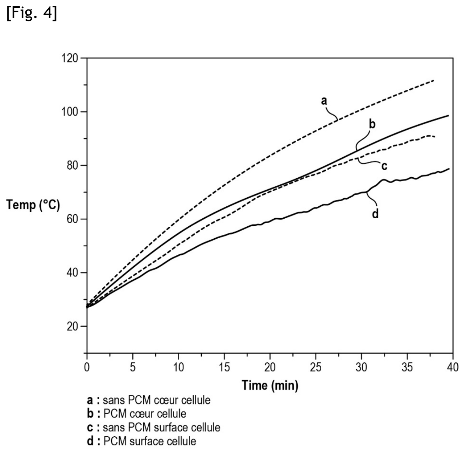

Le graphique de la figure 4 montre que la température du cœur des cellules 22 au bout de 40 min est de 110°C lorsque la batterie ne comporte pas de pièce de régulation et de 100°C lorsque la pièce de régulation 28 en bis(n-dodecylammonium)tétrachlorocuprate est positionnée autour des cellules.

Le graphique montre également que la température à la surface des cellules 22 au bout de 40 min est de 90°C lorsque la batterie ne comporte pas de pièce de régulation et de 80°C lorsque la pièce de régulation 28 en bis(n-dodecylammonium)tétrachlorocuprate est positionnée autour des cellules.

Ce graphique montre bien l'efficacité des pièces de régulation en un matériau comprenant un composé hybride organique/inorganique à changement de phase solide-solide pour refroidir les cellules d'une batterie.

**Revendications**

1. Système (20) comprenant :

    - un dispositif (22) susceptible de changer de température ; et
    - une pièce de régulation thermique (8, 24) montée au contact du dispositif (22) et configurée pour réaliser un transfert thermique avec le dispositif, la pièce de régulation (8, 24) étant une pièce massive comprenant un matériau à changement de phase solide-solide comprenant au moins un composé à changement de phase solide-solide, le composé à changement de phase solide-solide étant un composé hybride organique/inorganique, le matériau présentant une première structure solide lorsque le matériau est à une température inférieure à une température de transition du composé à changement de phase et présentant une deuxième structure solide, différente de la première structure solide, lorsque le matériau est à une température supérieure à la température de transition.

2. Système (20) selon la revendication 1, dans lequel le composé à changement de phase est de formule (I) :

$$(R_1R_2R_3NH)(R_4R_5R_6NH)MX_4 \qquad (I),$$

dans laquelle

- $R_1$, $R_2$, $R_3$, $R_4$, $R_5$, $R_6$ sont identiques ou différents, et représentent indépendamment un hydrogène ou une chaine hydrocarbonée monovalente saturée ou insaturée mais non aromatique, linéaire ou ramifiée, comportant de 4 à 18 atomes de carbone, la chaine hydrocarbonée pouvant être substituée ou non substituée,
- M est un métal de transition divalent choisi parmi le manganèse (Mn), le cuivre (Cu), le zinc (Zn), le fer (Fe), le cadmium (Cd) et le mercure (Hg), cobalt (Co), plomb (Pb), l'europium (Eu) et l'étain (Sn) et
- chaque X représente indépendamment un halogène, de préférence choisi parmi le chlore (Cl), le brome (Br), l'iode (I), un nitrate ($NO_3^-$), un chlorate ($ClO_3^-$), un dihydrogénophosphate ($H_2PO_4^-$) ou un hydrogénosulfate ($HSO_4^-$).

3. Système (20) selon la revendication 1 ou 2, dans lequel le composé à changement de phase est de formule (II) :

$$(R_1NH_3)(R_4NH_3)MX_4 \qquad (II),$$

dans laquelle

- $R_1$ et $R_4$ identiques ou différents, représentent indépendamment une chaine hydrocarbonée monovalente saturée ou insaturée mais non aromatique, linéaire ou ramifiée, comportant de 4 à 18 atomes de carbone, la chaine hydrocarbonée pouvant être substituée ou non substituée,
- M est un métal de transition divalent choisi parmi le manganèse (Mn), le cuivre (Cu), le zinc (Zn), le fer (Fe), le cadmium (Cd) et le mercure (Hg), le cobalt (Co), le plomb (Pb), l'europium (Eu) et l'étain (Sn), et
- chaque X représente indépendamment un d'halogène, de préférence choisi parmi le chlore (Cl), le brome (Br) et l'iode (I), un nitrate ($NO_3^-$), un chlorate ($ClO_3^-$), un dihydrogénophosphate ($H_2PO_4^-$) ou un hydrogénosulfate ($HSO_4^-$).

4. Système (20) selon l'une quelconque des revendications précédentes, dans lequel le composé à changement de phase est de formule (III) :

$$(C_nH_{2n+1}NH_3)_2MX_4 \qquad (III),$$

dans laquelle

- n a une valeur allant de 4 à 18,
- M est un métal de transition divalent choisi parmi le manganèse (Mn), le cuivre (Cu), le zinc (Zn), le fer (Fe), le cadmium (Cd) et le mercure (Hg), cobalt (Co), plomb (Pb), l'europium (Eu) et l'étain (Sn), et
- chaque X représente indépendamment un d'halogène, de préférence choisi parmi le chlore (Cl), le brome (Br) et l'iode (I), un nitrate ($NO_3^-$), un chlorate ($ClO_3^-$), un dihydrogénophosphate ($H_2PO_4^-$) ou un hydrogénosulfate ($HSO_4^-$).

5. Système (20) selon l'une quelconque des revendications 1 à 4, dans lequel le composé à changement de phase est de formule (III) dans laquelle :

- la chaine hydrocarbonée $C_nH_{2n+1}$ est linéaire,
- M est choisi parmi le cuivre (Cu), le manganèse (Mn) et le zinc (Zn), et
- chaque X représente indépendamment un halogène choisi parmi le chlore (Cl), le brome (Br) et l'iode (I), ou un nitrate ($NO_3^-$).

**6.** Système (20) selon l'une quelconque des revendications précédentes, dans lequel le composé à changement de phase est choisi parmi le bis(n-dodecylammonium)tétrachlorocuprate, le bis(n-dodecylammonium)tétrachlorozinate, le bis(n-dodecylammonium)tétrachloromanganate, ou un mélange de ceux-ci.

**7.** Système (20) selon l'une quelconque des revendications précédentes, dans lequel la première structure solide et la deuxième structure solide diffèrent par leur structure cristallographique ; par le nombre de liaisons ioniques présentes dans le composé à changement de phase ; par le nombre de liaisons faibles présentes dans le composé à changement de phase, les liaisons faibles étant des liaisons hydrogènes ou des liaisons de van der Waals.

**8.** Système (20) selon l'une quelconque des revendications précédentes, dans lequel la température de transition possède une valeur comprise dans la gamme allant de 20°C à 150°C.

**9.** Système (20) selon l'une quelconque des revendications précédentes, dans lequel la pièce de régulation thermique est en outre configurée pour réaliser un transfert thermique avec l'air ambiant, un fluide de refroidissement, ou une pièce distincte du système.

**10.** Système (20) selon l'une quelconque des revendications précédentes, dans lequel le dispositif comprend une batterie ou une cellule de batterie et dans lequel la pièce de régulation thermique est configurée pour absorber la chaleur émise par la batterie ou la cellule de batterie.

**11.** Système (20) selon l'une quelconque des revendications précédentes, dans lequel la pièce de régulation comporte une ou plusieurs ailettes.

**12.** Système (20) selon l'une quelconque des revendications précédentes, dans lequel le matériau à changement de phase comporte une première partie comprenant un premier composé à changement de phase et une deuxième partie comprenant un deuxième composé à changement de phase différent du premier composé à changement de phase, le premier composé présentant une première température de transition et le deuxième composé présentant une deuxième température de transition différente de la première température de transition.

**13.** Système (20) selon la revendication 12 et selon l'une quelconque des revendications 2 à 6, dans lequel le premier et le deuxième composés ont chacun pour formule une formule choisie parmi la formule (I), la formule (II), la formule (III), le bis(n-dodecylammonium)tétrachlorocuprate et le bis(n-dodecylammonium)tétrachlorozinate, bis(n-dodecylammonium)tétrachloromanganate.

**14.** Système (20) selon l'une quelconque des revendications précédentes, comprenant une pluralité de pièces de régulation (8, 24) comprenant chacune un matériau à changement de phase, le matériau à changement de phase d'une pièce de régulation (8, 24) étant identique ou différent du matériau à changement de phase de chaque autre pièce de régulation (8, 24).

**15.** Système (20) selon la revendication 14 et selon l'une quelconque des revendications 2 à 6 prises en combinaison, dans lequel le composé à changement de phase de chaque pièce de la pluralité de pièces (8, 24) a pour formule une formule choisi parmi la formule (I), la formule (II), la formule (III), le bis(n-dodecylammonium)tétrachlorocuprate et le bis(n-dodecylammonium)tétrachlorozinate, bis(n-dodecylammonium)tétrachloromanganates, bis(n-dodecylammonium)tétrachloromanganate.

**16.** Procédé (30) de fabrication de la pièce de régulation thermique (8, 24) du système (20) selon l'une quelconque des revendications 1 à 15, comportant les étapes suivantes :

- S1 : chauffer une composition initiale comprenant le matériau à changement de phase solide-solide à une température T1 supérieure ou égale à une température de ramollissement Tr du matériau, le matériau comportant un composé hybride organique/inorganique à changement de phase solide-solide présentant un état ramolli à la température T1, pour obtenir une composition ramollie qui présente une forme initiale ;
- S2 : mettre en forme de la composition ramollie obtenue dans l'étape S1 dans une forme finale différente de la forme initiale ; et
- S3 : refroidir la composition dans sa forme finale pour obtenir la pièce de régulation thermique (8, 24) présentant des propriétés de changement de phase solide-solide et présentant une température de changement de phase Tt' identique à une température de changement de phase Tt de la composition initiale.

**17.** Procédé (30) selon la revendication 16, dans lequel la température Tr est supérieure à la température de changement de phase du composé.

**18.** Procédé (30) selon la revendication 16 ou 17, dans lequel la température Tr est supérieure d'au moins 15°C à la température de changement de phase du composé.

**19.** Procédé (30) selon l'une quelconque des revendications 16 à 18, le procédé (30) étant choisi parmi un procédé de moulage, de surmoulage, d'injection et de fabrication additive.

[Fig. 1]

[Fig. 2]

[Fig. 3a]

EP 4 778 990 A1

[Fig. 3b]

[Fig. 3c]

[Fig. 4]

a : sans PCM cœur cellule
b : PCM cœur cellule
c : sans PCM surface cellule
d : PCM surface cellule

Europäisches
Patentamt

European
Patent Office

Office européen
des brevets

# RAPPORT DE RECHERCHE EUROPEENNE

Numéro de la demande

EP 26 15 2452

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | BAYRAMMURAD SAPAROV ET AL: "Organic-Inorganic Perovskites: Structural Versatility for Functional Materials Design", JOURNAL OF ORGANIC CHEMISTRY, vol. 116, no. 7, 4 avril 2016 (2016-04-04), pages 4558-4596, XP055435452, DOI: 10.1021/acs.chemrev.5b00715 * Introduction; Application of Sn-Based Conducting Hybrids; Charge Storage Properties and Applications * ----- | 1-19 | INV. C09K5/06 |
| X | US 2020/407615 A1 (SHARAR DARIN J [US] ET AL) 31 décembre 2020 (2020-12-31) * alinéas [0004], [0022] - [0024], [0091]; figures 18-19; tableau 2 * ----- | 1-19 | |
| X | SALGADO-PIZARRO R. ET AL: "Copper- and manganese-based layered hybrid organic-inorganic compounds with polymorphic transitions as energy storage materials", JOURNAL OF MATERIALS CHEMISTRY A, vol. 12, no. 29, 28 juin 2024 (2024-06-28), pages 18544-18553, XP093313559, GB ISSN: 2050-7488, DOI: 10.1039/D4TA01060D * Introduction * ----- -/-- | 1-19 | DOMAINES TECHNIQUES RECHERCHES (IPC) C09K |

Le présent rapport a été établi pour toutes les revendications

| Lieu de la recherche | Date d'achèvement de la recherche | Examinateur |
|---|---|---|
| La Haye | 12 mai 2026 | Martinez Marcos, V |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
....................................................................
& : membre de la même famille, document correspondant

EPO FORM 1503 03.82 (P04C02)

Europäisches Patentamt

European Patent Office

Office européen des brevets

# RAPPORT DE RECHERCHE EUROPEENNE

Numéro de la demande

EP 26 15 2452

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | BUSICO V ET AL: "The layer perovskites as thermal energy storage systems", SOLAR ENERGY, ELSEVIER, AMSTERDAM, NL, vol. 24, no. 6, 1 janvier 1980 (1980-01-01), pages 575-579, XP023631029, ISSN: 0038-092X, DOI: 10.1016/0038-092X(80)90356-4 [extrait le 1980-01-01] * abrégé; figure 3; tableau 2 * | 1-19 | |
| A | WO 2024/023520 A1 (SUNAMP LTD [GB]) 1 février 2024 (2024-02-01) * figures 1-5 * | 1-19 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 12 mai 2026 | Martinez Marcos, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 26 15 2452

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-05-2026

| Document brevet cité au rapport de recherche | Date de publication | Membre(s) de la famille de brevet(s) | | Date de publication |
|---|---|---|---|---|
| US 2020407615 A1 | 31-12-2020 | AUCUN | | |
| WO 2024023520 A1 | 01-02-2024 | CA | 3262612 A1 | 01-02-2024 |
| | | CN | 119923451 A | 02-05-2025 |
| | | EP | 4562109 A1 | 04-06-2025 |
| | | JP | 2025524179 A | 25-07-2025 |
| | | WO | 2024023520 A1 | 01-02-2024 |

EPO FORM P0460

Pour tout renseignement concernant cette annexe : voir Journal Officiel de l'Office européen des brevets, No.12/82